# EUROPEAN PATENT SPECIFICATION

(11) **EP 0 861 184 B1**
(45) Date of publication and mention of the grant of the patent: **22.03.2000**
(21) Application number: 96938355.3
(22) Date of filing: 14.11.1996
(51) Int. Cl.: B62D 5/04, H02K 29/08, H02K 7/10

(54) **IMPROVEMENTS IN ELECTRIC ACTUATORS FOR VEHICLE SYSTEMS**
VERBESSERUNGEN IN ELEKTRISCHEN STELLGLIEDERN FÜR FAHRZEUGSYSTEME
AMELIORATIONS DANS DES ORGANES DE COMMANDE ELECTRIQUES DE SYSTEMES DE VEHICULES

(30) Priority: 16.11.1995 GB 9523369; 17.11.1995 GB 9523531
(43) Date of publication of application: 02.09.1998
(73) Proprietor: Lucas Industries Limited, London W1Y 4DJ (GB)
(72) Inventor: COLES, Jeff, Ronald, West Midlands B92 7EB (GB); JOHNSON, Anthony, West Midlands B92 0PP (GB); WILKES, Mark, Anthony, Birmingham B38 9AQ (GB)
(74) Representative: Spall, Christopher John
(86) International application number: GB9602799
(87) International publication number: WO9718119

(56) References cited:
- EP-A- 0 549 429
- EP-A- 0 667 279
- PATENT ABSTRACTS OF JAPAN vol. 009, no. 280 (E-356), 8 November 1985 & JP 60 121955 A (NIHON SAABO KK), 29 June 1985,
- PATENT ABSTRACTS OF JAPAN vol. 010, no. 197 (E-418), 10 July 1986 & JP 61 042257 A (MATSUSHITA ELECTRIC IND CO LTD), 28 February 1986,

## Description

This invention relates to improvements in electric actuators for vehicle systems of the kind comprising a combination of at least two component assemblies comprising an electric motor having a rotor and a gearbox. Such actuators may be used in power steering systems, for example, or as actuators for electric brake assemblies. In particular, the invention relates to improvements in sensing means provided for the purpose of detecting the rotor position and hence speed of the motor.

In order to provide adequate control of the motor, it is important that the position of the motor rotor, and hence speed, is known or can be measured. This information can be used as a control variable in a general motor control strategy.

It is known to measure the rotor position by providing a separate magnetic sensor assembly which is mounted to an output shaft of the motor. Such arrangements do not lend themselves to low cost mass production, and can lead to an undesirable increase in actuator size.

The features of EP-A-0 549 429 and JP-A-60121955 form the preamble of claim 1.

According to a first aspect of our invention, in an electric actuator comprising an electric motor having a stator assembly and a rotor assembly which is concentric with the stator assembly and adapted to rotate about a common axis, the rotor assembly comprising magnetic means and the electric actuator further comprising sensing means adapted to sense the angular position of the rotor about the common axis by sensing the position of a magnetic field generated by the magnetic means, a magnetic shield assembly is provided which forms a part of the magnetic circuit containing the sensing means and magnetic means.

Preferably, the sensing means comprises one or more Hall effect sensing elements or magneto-resistive sensing elements which may be provided on a sensing body fixed relative to the housing of the motor. The sensor body may be adapted to support the sensing means in close proximity to the magnetic means. Preferably, three sensing elements are provided.

The rotor assembly may comprise one or more rotor magnets. In use, energisation of the stator assembly generates a magnetic field which interacts with the magnetic field of the rotor magnets in turn to cause the rotor assembly to rotate about its axis. The magnetic means could therefore comprise the rotor magnets themselves, in which case the sensing means directly detects the position of the rotor magnets.

In an alternative, the rotor assembly may further comprise one or more magnetic elements in addition to the rotor magnets. The magnetic means could therefore comprise only those additional magnetic elements, and in this case the sensing means would not detect the position of the rotor magnets, but would instead detect the position of the magnetic elements. This would allow the overall length of the rotor magnets to be kept to a minimum.

Most preferably, the magnetic means comprises the rotor magnets and the sensing means is adapted to measure the position of an overhang portion of the rotor magnets which overhangs the motor stator coils. Alternatively, the sensing means may sense the position of an end face of the rotor magnets.

The Hall effect sensing elements require a certain threshold level or density of magnetic flux to enable them to switch. Such flux densities usually require that special strong, rare earth magnets are used and/or that the sensing means is positioned very close to the magnets.

The magnetic shield assembly may further be adapted to shield the sensing elements from unwanted magnetic fields. The shield may protect the sensing elements from the field generated by the stator coils and/or external magnetic fields. The shield may be adapted to surround the sensing elements, and may be of steel or another material having a high magnetic permeability.

The sensing elements may be supported around the rotor assembly with a spacing between the sensing elements being 60° or 40° mechanical. In the case of a three pole motor, the sensors may be preferably mounted with a 40° mechanical spacing (120° electrical). Alternatively, a 20° mechanical spacing may be used.

In the case of a four pole motor, similar spacing of the sensors may be employed where the spacing is a multiple of 60 degrees.

In accordance with a second aspect of the invention, in a method of sensing the position of a rotor assembly in an electric motor comprising a sensing means which is adapted to sense the passing of a magnetic field generated by the rotor magnets of the motor, there is further provided a magnetic shield assembly adapted to improve the magnetic circuit containing the sensing means and the rotor magnets, the magnetic shield assembly forming part of said magnetic circuit.

Several embodiments of our invention are illustrated in the accompanying drawings in which:-
**Figure 1** is a layout of an electric actuated power assisted steering system for a vehicle which incorporates a first embodiment of an actuator in accordance with the present invention;
**Figure 2** is a view of an electric actuator for the system of Figure 1 including a longitudinal section through an electric motor and electro-magnetic clutch assembly;
**Figure 3** is a view of an embodiment of the sensor body fixed to the motor housing;
**Figure 4** shows an end elevation of the section as shown in Figure 3;
**Figure 5** shows a second arrangement for sensing rotor position in an actuator incorporated in an electrically actuated brake system; and
**Figure 6** illustrates a third arrangement for sensing motor rotor position directly from an end face of the rotor magnets.

In order to illustrate the motor position sensing of the present invention, an example of the use of an electric actuator in an electric vehicle power steering system is provided.

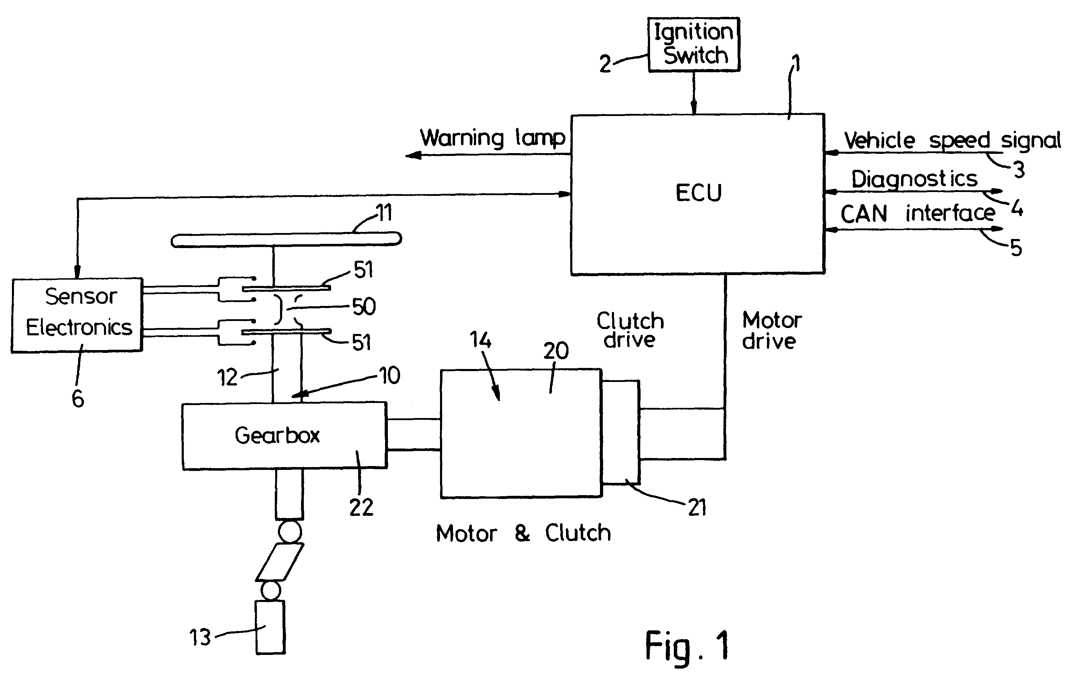

In the system illustrated in the layout of Figure 1 an electronic control unit 1 is adapted to receive signals from an ignition switch 2, vehicle speed signalling means 3, diagnostic means 4, CAN interface means 5, and torque sensor electronic means 6. The electronic control unit 1 operates on the various signals and emits an energising current to control the power assistance applied to a steering mechanism 10.

As illustrated a steering wheel 11 controls the operation of a steering linkage 13 through a column shaft 12. The torque applied to the column shaft 12 is augmented by an electric actuator 14 under the control of the energising current from the electronic control unit 1.

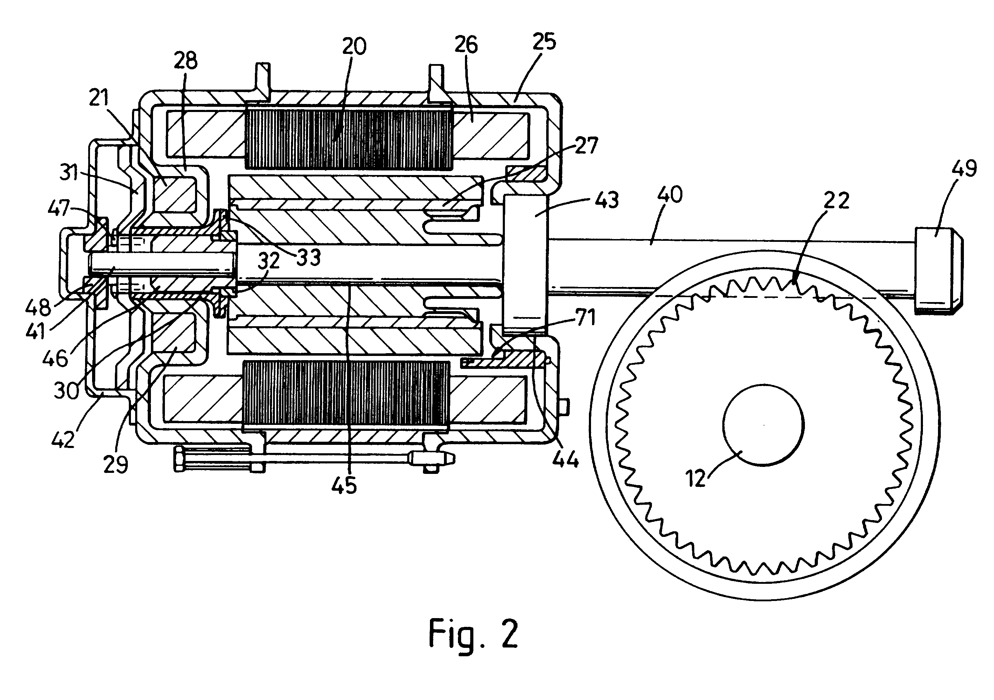

The electric actuator 14 is shown in detail in Figure 2 and comprises three component assemblies consisting of an electric motor 20, an electro-magnetic clutch 21, and a gearbox 22.

As illustrated in Figure 2 of the accompanying drawings, the electric motor 20 comprises a cylindrical housing 25 in which is housed a coil defining a stator assembly 26, and a rotor assembly 27 comprising an armature. The end of the housing 25 remote from the gearbox 22 is adapted to include an annular recess 28.

The electro-magnetic clutch 21 comprises an annular coil 29 which is located within the recess 28. The wall of the housing 25 defining the recess provides magnetic shielding between the stator 26 and the coil 29. A rotatable dog clutch member 30 is axially moveable in response to axial movement of a clutch armature 31 against the force in a biasing spring in the form of a Belleville or spring washer 32 to form a coupling drive engagement with a plurality of angularly spaced dog apertures 33 in the adjacent end of the armature 27.

A drive shaft 40 is journaled for rotation at one end in a bearing 41 housed within a cover plate 42 which encloses the clutch armature 31 and, optionally, is detachably secured to a wall at that end of the housing 25. The shaft 40 is also journaled for rotation at an intermediate point in its length in a bearing 43 retained within an opening 44 in a wall at the opposite end of the housing 25. A portion of the shaft 40 inboard of the bearing 43 defines a plane bearing 45 on which the armature 27 is journaled for rotation.

The clutch member 30 is keyed to the shaft 40 on a splined member 46 secured to the shaft 40, and the clutch armature 31 is secured to the shaft 40 by means of a retainer 47. The portion of the shaft 48 carrying the splined portion 46 comprises an end drive portion. The shaft 40 extends beyond the bearing 43 and through the gearbox 22 being journaled for rotation at its free end in a bearing 49.

When the steering wheel 11 is operated a signal from the sensor 6 is recognised by the electronic control unit which, in turn, emits an energising current to energise the stator 26 and cause rotation of the armature 27. Since the clutch 21 is engaged that rotation is transmitted to the drive portion 48 of the shaft 40, and through a transmission portion of the shaft 40 in the gearbox 22, in turn to augment the torque applied manually to the column shaft 12 from the steering wheel 11.

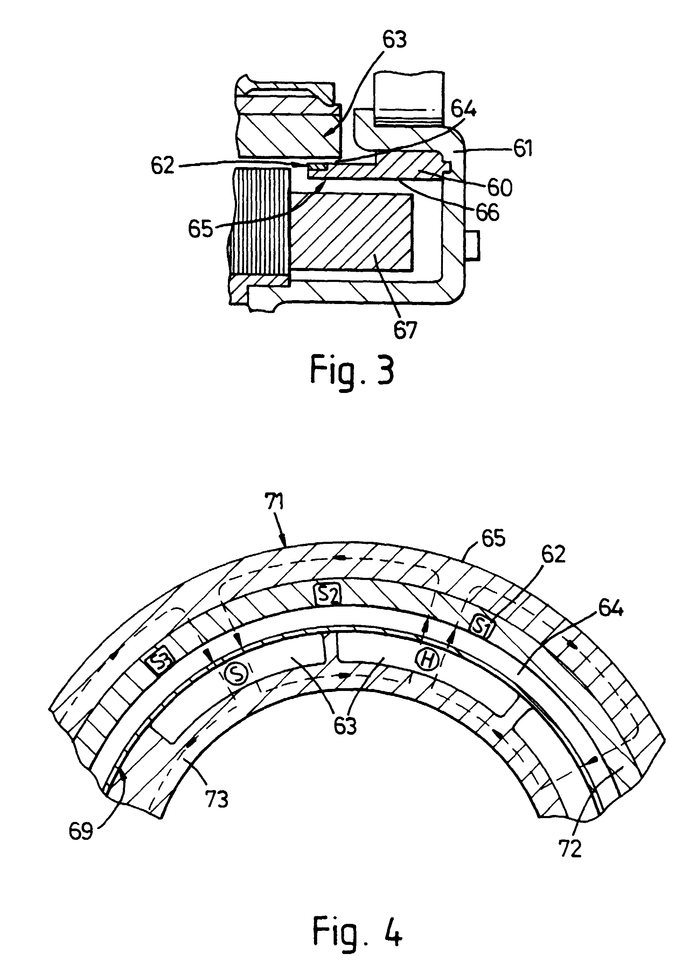

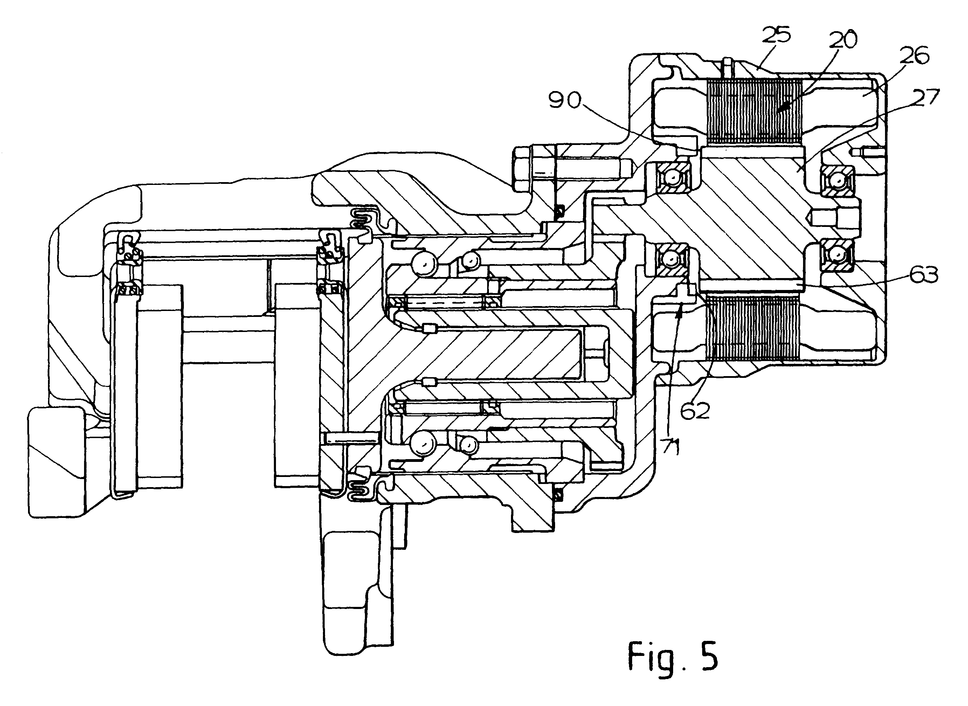

The actuator described above with reference to Figure 2 includes a motor rotor angular position sensor 71 in accordance with the present invention. The motor rotor angular position sensor 71 is illustrated in more detail in Figure 3 and 4 of the accompanying drawings.

The angular position of the motor rotor assembly 27 is sensed through the use of a motor rotor angular position sensor assembly 71 placed so as to detect the passing of an overhang section of the rotor magnets 63 wherein sensing elements 62 are provided with a magnetic shield 65 that provides a magnetic path for the sensor circuit itself whilst shielding the sensor from the effects from any external magnetic fields. Determining the angular position allows the motor rotor speed to be calculated, i.e. by taking several position readings at known time intervals.

Figure 3 shows the sensor body 60, fixed to the motor housing 61, which carries an extension 66 having on it's inner face sensing elements 62. The sensor body 60 and extension 66 are dimensioned so that the sensing elements 62 are in close proximity to the rotor magnets 63, providing a small sensor air gap 64 across which a magnetic circuit is formed. A steel backplate 65 is used to provide the sensing elements with a suitable magnetic circuit for co-operation with the rotor magnets 63 or poles on the motor. Additionally the steel backplate 65 shields the sensing elements 62 from the effects of interference from the magnetic fields generated by the motor coils 67.

In operation a sensing element 62 switches each time a magnetic circuit is made or broken which occurs as a pole of the motor or rotor magnet 63 passes that sensing element 62. This switching signal is passed via connections, not shown, to a motor control circuit, not shown, which is used to control the position, speed and direction of the motor in use.

Figure 4 shows an end elevation of the section as shown in Figure 3, where a section of the magnetic sensor assembly 71 is shown in detail. The rotor assembly 27 carries a back iron sleeve 73 having magnets 63 secured around its periphery covered by a rotor sleeve 69. A clearance or air gap 64 is provided to allow the rotor assembly 27 to move angularly with respect to the sensor assembly 71 and motor stator (not shown).

The sensor assembly 71 is shown in Figure 4 surrounding an arc or outer section of the rotor assembly 27. The size and number of sensing elements 62 within the sensor assembly 71 could vary between 1 and any number covering the entire circumference of the rotor assembly 27, depending upon the configuration i.e. the number of rotor pole pieces of the motor. Three sensing elements are shown in the figure.

The sensing elements are arranged, as shown in Figure 4, with a spacing of 120° electrical (40° mechanical). This applies to a 3 pole motor. In the case of a 4 pole motor, similar arrangements can be used but in this case 120° electrical is equivalent to 60° mechanical.

The sensor assembly 71 comprises a non-magnetic sensor carrier 72 which supports the magnetic sensing elements 62. This is surrounded by a magnetic sensor back iron 65 which acts to enhance the magnetic field strength around the sensing elements 62 to aid switching and eliminate magnetic interference, and importantly to provide the sensor assembly 71 with its mechanical robustness, as typically the materials from which a suitable non-magnetic sensor carrier would be made are low in mechanical strength.

A further embodiment of a motor rotor position sensor is illustrated in Figure 5 of the accompanying drawings. In this illustration, the motor 20 forms a part of an electric disc brake assembly. The operation of this assembly is described in detail in our earlier application no. 9519289.4. In this embodiment, the magnetic sensing elements 62 are arranged on a sensing assembly 71 so as to detect the passing of the end face 90 of the rotor magnet 63 or rotor magnets of the rotor assembly 27 as opposed to the previous embodiment in which the sensing elements 62 are aligned to detect the passing of the upper face of the rotor magnets (i.e. the face furthest away from the axis of rotation). This enables a shorter rotor assembly 27 to be used as no overhang is needed. Otherwise, the sensing assembly is the same as illustrated in Figure 3 and 4.

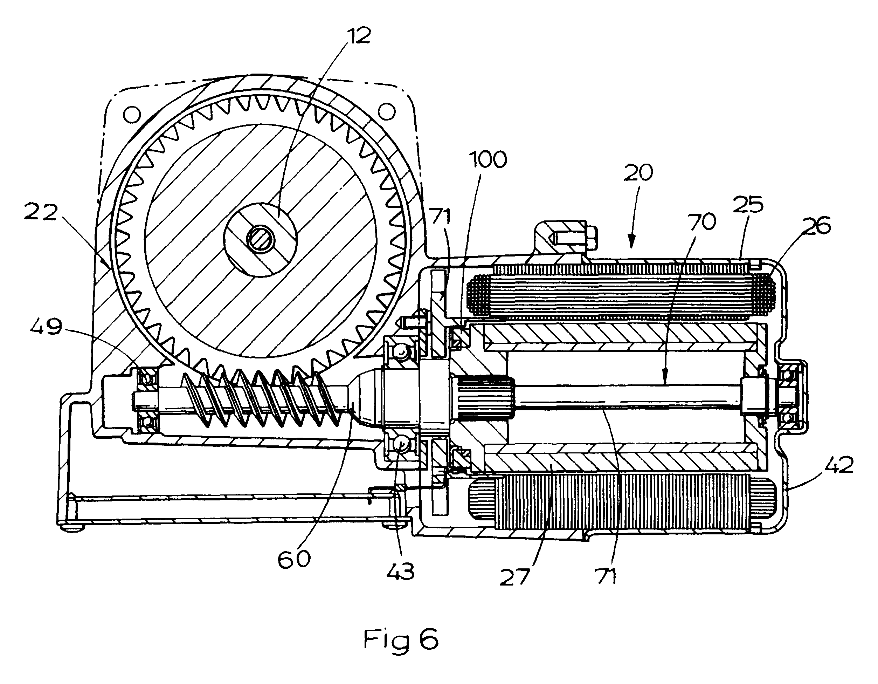

In Figure 6, a final embodiment of the present invention is illustrated. In this case, instead of sensing directly from the rotor magnets 63, one or more separate magnetic elements 100 are provided as an integral part of the rotor assembly 27, and the sensing assembly 71 is arranged so that it detects the passing of these magnetic elements 100. Again, this helps to reduce the cost of the actuator and reduces the size of rotor magnets 63 which are needed.

It will be readily understood from the above description that the present invention lies in improvements in detecting the position of a rotor in an electric actuator so as to minimise costs and/or actuator bulk and/or reduce assembly time when compared with the prior art. This is achieved by detecting the passing of a magnetic field generated by the rotor assembly.

## Claims

1. An electric actuator (14) comprising an electric motor (20) having a stator assembly (26) and a rotor assembly (27) which is concentric with the stator assembly (26) and adapted to rotate about a common axis, the rotor assembly (27) comprising magnetic means and the electric actuator further comprising sensing means (71) adapted to sense the angular position of the rotor assembly (27) about the common axis by sensing the position of a magnetic field generated by the magnetic means, characterised in that a magnetic shield assembly is provided which forms a part of the magnetic circuit containing the sensing means and magnetic means.

2. An electric actuator according to claim 1 in which the sensing means comprises one or more Hall effect or magneto-resistive sensing elements (62).

3. An electric actuator according to claim 2 in which the sensing elements (62) are provided on a sensor body (61) fixed relative to a housing (25) for the motor.

4. An electric actuator according to any one of claims 2 or 3 in which the sensor body (61) is adapted to support the sensing elements (62) in close proximity to the magnetic means.

5. An electric actuator according to any preceding claim in which the rotor assembly (27) comprises one or more rotor magnets (63) and in which the magnetic means comprises the rotor magnets (63).

6. An electric actuator according to any one of claims 1 to 4 in which the rotor assembly (27) comprises one or more magnetic elements (100) in addition to one or more rotor magnets and the sensing means (71) is adapted to detect the position of the magnetic elements (100).

7. An electric actuator according to claim 5 in which the sensing means is adapted to measure the position of an overhang portion of the rotor magnets (65) which overhangs the motor stator (26).

8. An electric actuator according to claim 5 in which the sensing means (71) is adapted to measure the position of an end face of the rotor magnets.

9. An electric actuator according to claim 2 in which the magnetic shield assembly (65) comprises a steel backplate which surrounds one or more Hall-effect or magneto-resistive sensing elements (62).

10. An electric actuator according to any preceding claim in which the rotor (2) comprises a back iron sleeve (73) having a plurality of rotor magnets (63) secured around its periphery covered by a rotor sleeve (69).

11. An electric actuator according to claim 9 in which the magnetic shield assembly (65) is further adapted to shield the sensing elements (62) from unwanted magnetic fields.

12. An electric actuator according to any preceding claim in which the sensing elements (62) are supported with a spacing between the sensing elements (62) being 60° or 40° or 20° mechanical.

13. A method of sensing the position of a rotor assembly (27) in an electric motor (20) comprising providing a sensing means which is adapted to sense the passing of a magnetic field generated by the rotor magnets (63) of the motor (20), characterised in that there is further provided a magnetic shield assembly (65) adapted to improve the magnetic circuit containing the sensing means and the rotor magnets (63), the magnetic shield assembly (65) forming part of said magnetic circuit.

## Patentansprüche

1. Elektrisches Stellglied (14), aufweisend einen Elektromotor (20) mit einem Statoraufbau (26) und einem Rotoraufbau (27), der mit dem Statoraufbau (26) konzentrisch ist und dafür eingerichtet ist, um eine gemeinsame Achse zu rotieren, wobei der Rotoraufbau (27) eine magnetische Einrichtung aufweist und das elektrische Stellglied ferner eine Abfühleinrichtung (71) umfaßt, die dafür eingerichtet ist, die Winkellage des Rotoraufbaus (27) um die gemeinsame Achse abzufühlen, indem die Lage eines durch die magnetische Einrichtung erzeugten Magnetfeldes abgefühlt wird, dadurch gekennzeichnet, daß ein magnetischer Abschirmaufbau vorgesehen ist, der einen Teil des die Abfühleinrichtung und die magnetische Einrichtung enthaltenden Magnetkreises bildet.

2. Elektrisches Stellglied nach Anspruch 1, in dem die Abfühleinrichtung eines oder mehrere Halleffekt- oder magnetoresistive Abfühlelemente (62) aufweist.

3. Elektrisches Stellglied nach Anspruch 2, in dem die Abfühlelemente (62) auf einem Sensorkörper (61) vorgesehen sind, der in bezug auf ein Gehäuse (25) für den Motor fixiert ist.

4. Elektrisches Stellglied nach einem der Ansprüche 2 oder 3, in dem der Sensorkörper (61) dafür eingerichtet ist, die Abfühlelemente (62) in unmittelbarer Nähe zur magnetischen Einrichtung zu tragen.

5. Elektrisches Stellglied nach einem der vorhergehenden Ansprüche, in dem der Rotoraufbau (27) einen oder mehrere Rotormagnete (63) aufweist und in dem die magnetische Einrichtung die Rotormagnete (63) umfaßt.

6. Elektrisches Stellglied nach einem der Ansprüche 1 bis 4, in dem der Rotoraufbau (27) zusätzlich zu einem oder mehreren Rotormagneten eines oder mehrere magnetische Elemente (100) aufweist und die Abfühleinrichtung (71) dafür eingerichtet ist, die Lage der magnetischen Elemente (100) festzustellen.

7. Elektrisches Stellglied nach Anspruch 5, in dem die Abfühleinrichtung dafür eingerichtet ist, die Lage eines Überkragungsabschnitts der Rotormagnete (65) zu messen, der den Motorstator (26) überkragt.

8. Elektrisches Stellglied nach Anspruch 5, in dem die Abfühleinrichtung (71) dafür eingerichtet ist, die Lage einer Endfläche der Rotormagnete zu messen.

9. Elektrisches Stellglied nach Anspruch 2, in dem der magnetische Abschirmaufbau (65) eine Rückenplatte aus Stahl aufweist, die eines oder mehrere Halleffekt- oder magnetoresistive Abfühlelemente (62) umgibt.

10. Elektrisches Stellglied nach einem der vorhergehenden Ansprüche, in dem der Rotor (2) eine Eisenhülse (73) mit Hinterlegung mit mehreren Rotormagneten (63) aufweist, die um ihren durch eine Rotorhülse (69) bedeckten Umfang befestigt sind.

11. Elektrisches Stellglied nach Anspruch 9, in dem der magnetische Abschirmaufbau (65) ferner dafür eingerichtet ist, die Abfühlelemente (62) gegen unerwünschte Magnetfelder abzuschirmen.

12. Elektrisches Stellglied nach einem der vorhergehenden Ansprüche, in dem die Abfühlelemente (62) mit einem mechanische 60° oder 40° oder 20° betragenden Abstand zwischen den Abfühlelementen (62) gehalten werden.

13. Verfahren zum Abfühlen der Lage eines Rotoraufbaus (27) in einem Elektromotor (20), umfassend ein Vorsehen einer Abfühleinrichtung, die dafür eingerichtet ist, den Durchgang eines durch die Rotormagnete (63) des Motors (20) erzeugten Magnetfeldes abzufühlen, dadurch gekennzeichnet, daß ferner ein magnetischer Abschirmaufbau (65) vorgesehen ist, der dafür eingerichtet ist, den die Abfühleinrichtung und die Rotormagnete (63) enthaltenden Magnetkreis zu verbessern, wobei der magnetische Abschirmaufbau (65) einen Teil des Magnetkreises bildet.

## Revendications

1. Actionneur électrique (14) comprenant un moteur électrique (20) possédant un ensemble stator (26) et un ensemble rotor (27) qui est concentrique à l'ensemble stator (26) et adapté pour tourner autour d'un axe commun, l'ensemble rotor (27) comprenant un moyen magnétique et l'actionneur électrique comprenant en outre un moyen capteur (71) adapté pour capter la position angulaire de l'ensemble rotor (27) autour de l'axe commun en captant la position d'un champ magnétique engendrée par le moyen magnétique, caractérisé en ce qu'il est prévu un ensemble de blindage magnétique qui forme une partie du circuit magnétique contenant le moyen capteur et le moyen magnétique.

2. Actionneur électrique selon la revendication 1, dans lequel le moyen capteur comprend un ou plusieurs éléments capteurs (62) à effet Hall ou magnétorésistants.

3. Actionneur électrique selon la revendication 2, dans lequel les éléments capteurs (62) sont prévus sur un corps de capteur (61) fixe par rapport à un carter (25) prévu pour le moteur.

4. Actionneur électrique selon l'une quelconque des revendications 2 ou 3, dans lequel le corps de capteur (61) est adapté pour supporter les éléments capteurs (62) à grande proximité du moyen magnétique.

5. Actionneur électrique selon l'une quelconque des revendications précédentes, dans lequel l'ensemble rotor (27) comprend un ou plusieurs aimants de rotor (63) et dans lequel le moyen magnétique comprend les aimants de rotor (63).

6. Actionneur électrique selon l'une quelconque des revendications 1 à 4, dans lequel l'ensemble rotor (27) comprend un ou plusieurs éléments magnétiques (100) en supplément d'un ou plusieurs aimants de rotor et le moyen capteur (71) est adapté pour détecter la position des éléments magnétiques (100).

7. Actionneur électrique selon la revendication 5, dans lequel le moyen capteur est adapté pour mesurer la position d'une portion en surplomb des aimants de rotor (65) qui est en surplomb par rapport au stator (26) du moteur.

8. Actionneur électrique selon la revendication 5, dans lequel le moyen capteur (71) est adapté pour mesurer la position d'une face terminale des aimants du rotor.

9. Actionneur électrique selon la revendication 2, dans lequel l'ensemble de blindage magnétique (65) comprend une contre-plaque en acier qui entoure un ou plusieurs éléments capteurs à effet Hall ou magnétorésistants (62).

10. Actionneur électrique selon l'une quelconque des revendications précédentes, dans lequel le rotor (2) comprend un contre-manchon (73) en fer possédant une pluralité d'aimants de rotor (63) fixés sur le tour de sa périphérie et recouverts par un manchon de rotor (69).

11. Actionneur électrique selon la revendication 9, dans lequel, l'ensemble de blindage magnétique (65) est en outre adapté pour protéger les éléments capteurs (62) des champs magnétiques indésirables.

12. Actionneur électrique selon l'une quelconque des revendications précédentes, dans lequel les éléments capteurs (62) sont supportés avec un espacement entre les éléments capteurs (62) de 60° ou 40° ou 20° mécaniques.

13. Procédé pour capter la position d'un ensemble rotor (27) dans un moteur électrique (20) qui consiste à prévoir un moyen capteur qui est adapté pour capter le passage d'un champ magnétique engendré par les aimants de rotor (63) du moteur (20), caractérisé en ce qu'il est prévu en outre un ensemble de blindage magnétique (65) adapté pour améliorer le circuit magnétique contenant le moyen capteur et les aimants de rotor (63), l'ensemble blindage magnétique (65) faisant partie dudit circuit magnétique.
